# EUROPEAN PATENT SPECIFICATION

(11) **EP 3 539 704 B1**
(45) Date of publication and mention of the grant of the patent: **28.10.2020**
(21) Application number: 18161716.8
(22) Date of filing: 14.03.2018
(51) Int. Cl.: B23H 7/20, B23H 7/26, B23H 9/14, B23H 1/00

(54) **SYSTEM FOR DRILLING A WORKPIECE BY ELECTRICAL DISCHARGE MACHINING**
SYSTEM ZUM BOHREN EINES WERKSTÜCKS DURCH FUNKENEROSION
SYSTÈME DE FORAGE D'UNE PIÈCE PAR USINAGE À DÉCHARGE ÉLECTRIQUE

(43) Date of publication of application: 18.09.2019
(73) Proprietor: Ocean Technologies Co., Ltd., 413 Taichung City (TW)
(72) Inventor: Wong, Hung-Chih, 406 Taichung City (TW); Hsia, Pen-Chiang, 542 Caotun Township, Nantou County (TW)
(74) Representative: V.O.

(56) References cited:
- US-A1- 2013 092 660
- US-A1- 2013 213 941
- US-B1- 6 723 942

## Description

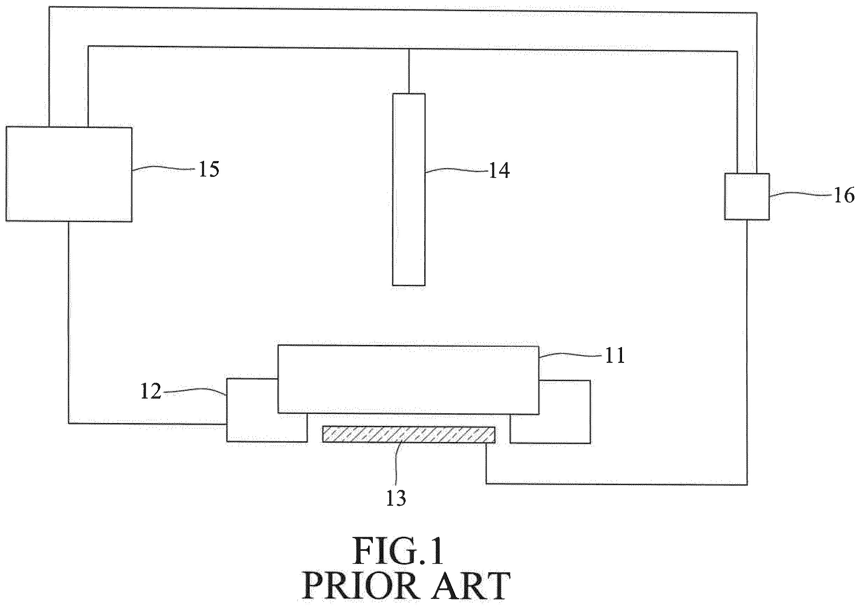

The disclosure relates to a system of electrical discharge machining (EDM), and more to a system for drilling a workpiece by EDM. Such a system is known from US 6 723 942 B1 disclosing a system for EDM drilling with break-through detection based on frequency analysis of the gap-voltage signal. Another conventional EDM machine adapted to drill a workpiece 11 by EDM is illustrated in Figure 1. The conventional EDM machine includes a holder 12 on which the workpiece 11 is disposed, a penetration detector board 13 which is disposed between the holder 12 and below the workpiece 11, a tool electrode 14 which is vertically movable for drilling the workpiece 11 by EDM, an electrical source 15 which is electrically connected to the holder 12 and the tool electrode 14, and a through hole detector 16 which is electrically connected to the penetration detector board 13, the tool electrode 14 and the electrical source 15.

The electrical source 15 supplies electrical power to the tool electrode 14 so as to enable the tool electrode 14 to drill the workpiece 11 by EDM. After penetrating the workpiece 11, the tool electrode 14 touches the penetration detector board 13 and forms a conducting loop cooperatively with the penetration detector board 13 and the through hole detector 16. In response to detection of increased voltage on the penetration detector board 13 due to electrical contact with the tool electrode 14, the through hole detector 16 determines that the workpiece 11 has been penetrated and causes the electrical source 15 to stop supplying electrical power. However, since repeated contact between the tool electrode 14 and the penetration detection board 13 may result in abrasion of the penetration detector board 13, the penetration detector board 13 has to be replaced after being used for a period of time.

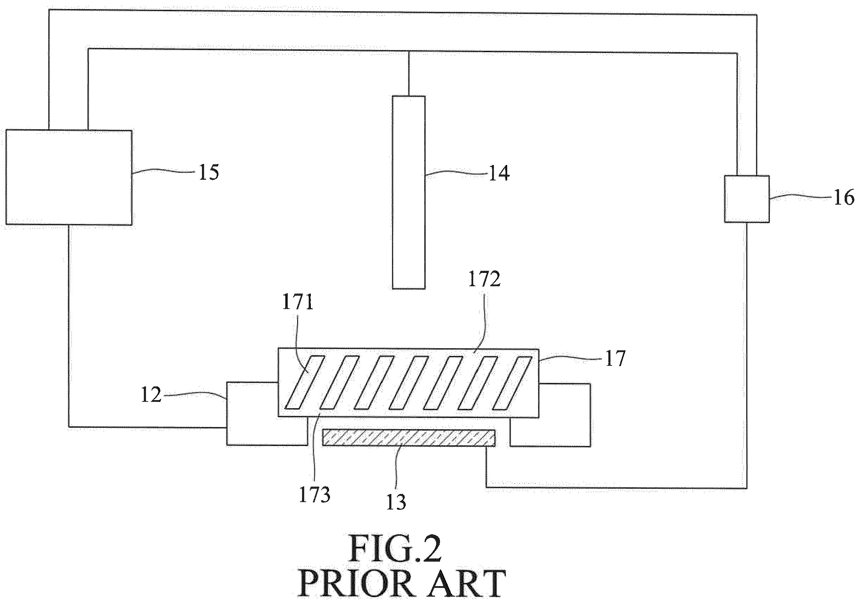

In addition, referring to Figure 2, for another workpiece 17 which has an upper wall 172 that is required to be penetrated, a bottom wall 173 that is required to be kept intact, and a plurality of side walls that define vacancies 171 between the upper and bottom walls 172 and 173, since there is no way the penetration detector board 13 can be arranged between the upper and bottom walls 172 and 173, the conventional EDM machine is unable to realize penetrating the upper wall 172 without drilling through the bottom wall 173. In other words, structure types of a workpiece that can be processed by the conventional EDM machine are limited.

Therefore, an object of the disclosure is to provide a system for drilling a workpiece by electrical discharge machining (EDM) that can alleviate at least one of the drawbacks of the prior art.

According to the disclosure, the system includes a base, a holder, a positioning unit, a processing unit and a control unit.

The holder is disposed on the base and is configured to hold the workpiece.

The positioning unit includes a frame, a screw rod, a spindle mover, a motor and a displacement detector. The frame is disposed on the base. The screw rod is rotatably mounted to the frame, and extends parallel to a direction for drilling the workpiece. The screw rod is rotatable about an axis of the screw rod along which the screw rod extends. The spindle mover threadedly engages the screw, and is actuated by rotation of the screw rod to move along the direction for drilling the workpiece. The motor is disposed on the frame, and is mechanically coupled to the screw rod. The motor is configured to drive rotation of the screw rod. The displacement detector is disposed on the motor, and is configured to output a displacement signal which indicates a position of the spindle mover based on an amount of rotation outputted by the motor.

The processing unit includes a spindle and a tool electrode . The spindle is provided with a fluid delivery mechanism and is disposed on the spindle mover. The tool electrode is coupled to a portion of the spindle near the holder and extends toward the workpiece so as to drill the workpiece by EDM.

The control unit is configured to drive rotation of the motor and to supply electricity to the tool electrode for causing electrical discharges between the tool electrode and the workpiece. The control unit includes a position recorder, a voltage recorder, a spectrum analyzer and a processor. The position recorder is electrically connected to the displacement detector for receiving the displacement signal from the displacement detector. The position recorder generates a weighted signal by performing weighted computation on the displacement signal. The voltage recorder is electrically connected to the tool electrode, and continuously measures operating voltage of the tool electrode so as to obtain an operating voltage signal. The spectrum analyzer is electrically connected to the voltage recorder for receiving the operating voltage signal from the voltage recorder, and computes spectrum information based on the operating voltage signal. The processor is electrically connected to the position recorder, the spectrum analyzer, the motor and the tool electrode. The processor is configured to determine, based on the weighted signal and the spectrum information, whether the workpiece is penetrated by EDM, and to stop driving rotation of the motor and stop supplying electricity to the tool electrode after the spindle mover has moved an additional distance since it is determined that the workpiece is penetrated by EDM.

Other features and advantages of the disclosure will become apparent in the following detailed description of the embodiment with reference to the accompanying drawings, of which:
Figure 1 is a schematic diagram illustrating a conventional electrical discharge machining (EDM) machine utilized to drill a workpiece by EDM;
Figure 2 is a schematic diagram illustrating the conventional EDM machine utilized to drill another workpiece by EDM;
Figure 3 is a schematic diagram illustrating an embodiment of a system for drilling a workpiece by EDM according to the disclosure;
Figure 4 is a fragmentary schematic diagram illustrating an embodiment of drilling of the workpiece by EDM where the workpiece is not yet penetrated;
Figure 5 is a voltage plot illustrating an embodiment of an operating voltage signal obtained based on an operating voltage of a tool electrode according to the disclosure;
Figure 6 is a visual representation of an embodiment of spectrum information computed based on the operating voltage signal according to the disclosure; and
Figure 7 is a fragmentary schematic diagram illustrating an embodiment of drilling of the workpiece by EDM where the workpiece has been penetrated.

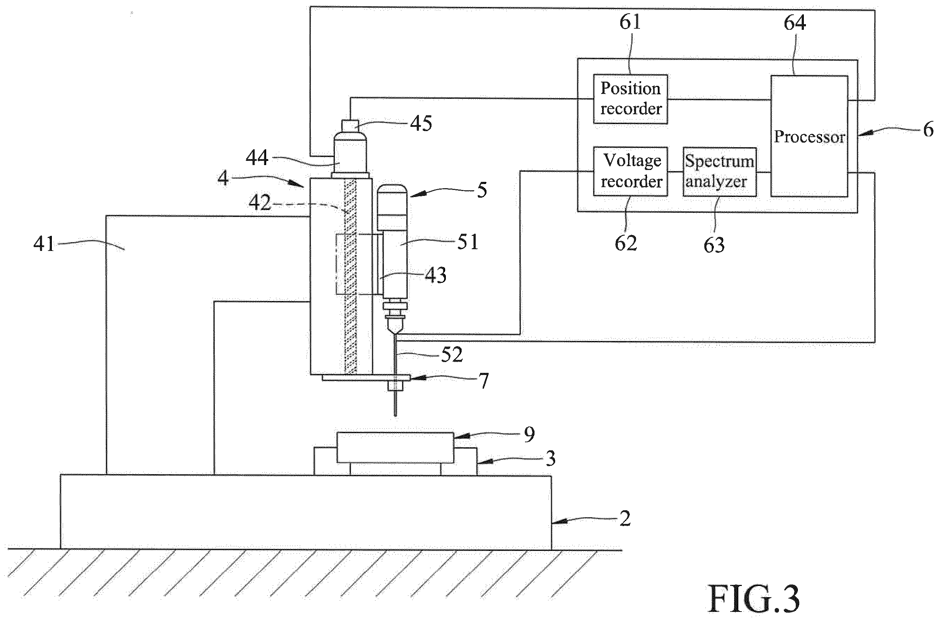

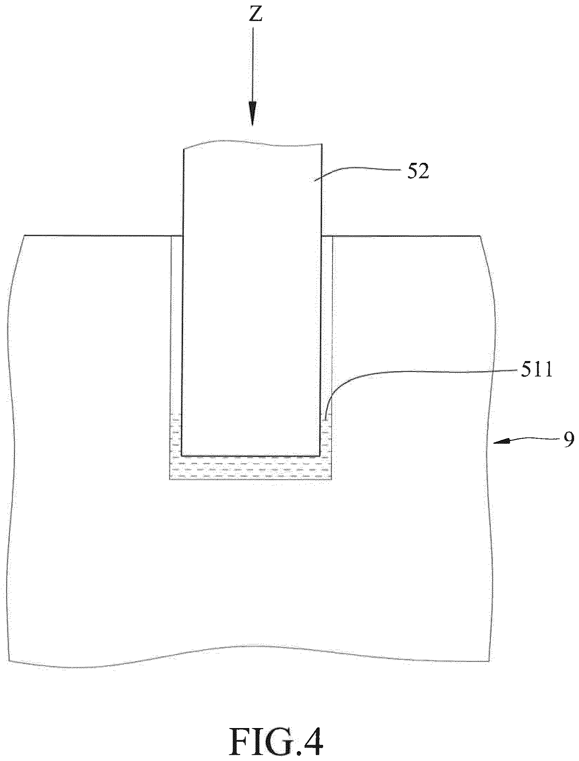

Referring to Figures 3 and 4, an embodiment of a system for drilling a workpiece 9 by electrical discharge machining (EDM) according to the disclosure is illustrated. The system includes a base 2, a holder 3, a positioning unit 4, a processing unit 5, a control unit 6 and an electrode guide 7.

The holder 3 is disposed on the base 2 and is configured to hold the workpiece 9.

The positioning unit 4 includes a frame 41, a screw rod 42, a spindle mover 43, a motor 44 and a displacement detector 45. The frame 41 is disposed on the base 2. The screw rod 42 is rotatably mounted to the frame 41, extends parallel to a direction (Z) for drilling the workpiece 9 (also referred to as "direction for drilling (Z)"), and is rotatable about an axis of the screw rod 42 along which the screw rod 42 extends. The spindle mover 43 threadedly engages the screw rod 42 and is actuated by rotation of the screw rod 42 to move along the direction for drilling (Z) . The motor 44 is disposed on the frame 41 and is mechanically coupled to the screw rod 42. The motor 44 is configured to drive rotation of the screw rod 42. The displacement detector 45 is disposed on the motor 44, and is configured to output a displacement signal which indicates a position of the spindle mover 43 based on an amount of rotation outputted by the motor 44. In this embodiment, the displacement detector 45 is implemented by a rotary encoder which converts the amount of rotation outputted by the motor 44 into the displacement signal the voltage of which represents the position of the spindle mover 43. However, implementation of the displacement signal is not limited to what is disclosed herein and may vary in other embodiments. For example, the current of the displacement signal may be implemented to carry information regarding the position of the spindle mover 43, or the displacement signal may be realized in the form of a data packet.

The processing unit 5 includes a spindle 51 and a tool electrode 52. The spindle 51 is provided with a fluid delivery mechanism and is disposed on the spindle mover 43. The tool electrode 52 is coupled to a portion of the spindle 51 near the holder 3 and extends toward the workpiece 9 so as to drill the workpiece 9 by EDM. In this embodiment, the spindle 51 is configured to supply cutting fluid 511 via the fluid delivery mechanism to the workpiece 9.

Referring to Figures 3, 5 and 6, the control unit 6 is configured to drive rotation of the motor 44 and to supply electricity to the tool electrode 52 for causing electrical discharges between the tool electrode 52 and the workpiece 9. The control unit 6 includes a position recorder 61, a voltage recorder 62, a spectrum analyzer 63 and a processor 64.

The position recorder 61 is electrically connected to the displacement detector 45 for receiving the displacement signal from the displacement detector 45. The position recorder 61 is configured to generate a weighted signal by performing weighted computation on the displacement signal. Specifically speaking, the position recorder 61 is configured to generate the weighted signal by, when the position of the spindle mover 43 indicated by the displacement signal is farther away from the workpiece 9 than a preset position is from the workpiece 9, performing weighted computation on the displacement signal with a first weight, and by, when the position of the spindle mover 43 indicated by the displacement signal is closer to the workpiece 9 than the preset position is to the workpiece 9, performing weighted computation on the displacement signal with a second weight, which is greater than the first weight. In this way, when the position of the spindle mover 43 indicated by the displacement signal is closer to the workpiece 9 than the preset position is to the workpiece 9, the weighted signal which is generated by performing weighted computation on the displacement signal may have a more significant magnitude variation, so as to facilitate further determinations to be made based thereon. In this embodiment, the weighted computation may be implemented by adding one of different constants (e.g., the first weight or the second weight) to the displacement signal, or by multiplying the displacement signal by one of the different constants. Moreover, the preset position is decided in advance and corresponds to a position of the spindle mover 43 where the tool electrode 52 should have penetrated the workpiece 9. The expression of "penetrating the workpiece 9" or the like as used in this disclosure means that the workpiece 9 is fully punctured all the way through (i.e., a through hole would be formed in the workpiece 9 after penetration is complete).

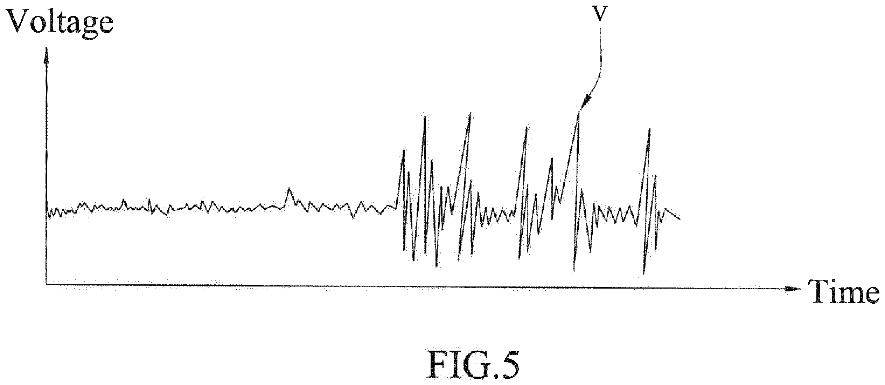

The voltage recorder 62 is electrically connected to the tool electrode 52. The voltage recorder 62 continuously measures operating voltage of the tool electrode 52 so as to obtain an operating voltage signal (V) as shown in Figure 5.

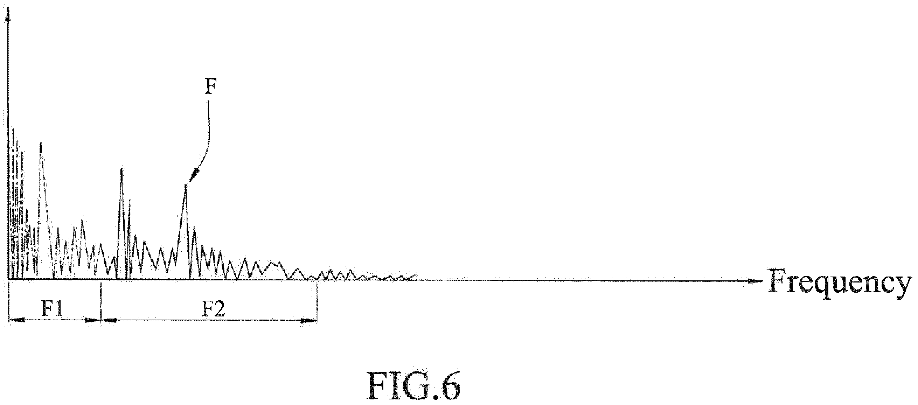

The spectrum analyzer 63 is electrically connected to the voltage recorder 62 for receiving the operating voltage signal (V) from the voltage recorder 62. The spectrum analyzer 63 is configured to compute spectrum information (F) as shown in Figure 6 based on the operating voltage signal (V). Specifically speaking, the spectrum analyzer 63 is configured to perform fast Fourier transform (FFT) on the operating voltage signal (V) obtained by measuring the operating voltage of the tool electrode 52 in a predetermined time duration, and to remove a low frequency component (F1) of the operating voltage signal (V) which has undergone FFT to result in the spectrum information (F) which includes a remaining high frequency component (F2).

The processor 64 is electrically connected to the position recorder 61, the spectrum analyzer 63, the motor 44 and the tool electrode 52. The processor 64 is configured to determine, based on the weighted signal and the spectrum information (F), whether the workpiece 9 has been penetrated by EDM, and to stop driving rotation of the motor 44 and stop supplying electricity to the tool electrode 52 after the spindle mover 43 has moved an additional distance since it is determined that the workpiece 9 has been penetrated by EDM. Specifically speaking, the processor 64 is configured to, when it is determined that the weighted signal is generated by performing weighted computation on the displacement signal with the second weight, determine that the spindle mover 43 is at a position closer to the workpiece 9 than the preset position is to the workpiece 9. In this embodiment, the processor 64 compares the weighted signal with a preset threshold value so as to determine whether the weighted signal is generated by performing weighted computation on the displacement signal with the second weight. Furthermore, the processor 64 is configured to, when it is determined that the spectrum information (F) conforms with a predetermined condition and after it is determined that said spindle mover 43 is at the position closer to the workpiece 9 than the preset position is to the workpiece 9, determine that the workpiece 9 has been penetrated by EDM.

It is worth to note that the determination of whether the spectrum information (F) conforms with the predetermined condition may be implemented in various ways, and this disclosure is not limited in the aspect of the implementation of such determination. For instance, a form of an image, such as a predetermined figure pattern, may be provided to the processor 64, and the processor 64 is configured to determine that the spectrum information (F) conforms with the predetermined condition when it is determined that a graph of a function represented by the spectrum information (F) conforms with the predetermined figure pattern. As another example, the processor 64 may be configured to determine that the spectrum information (F) conforms with the predetermined condition when it is determined that the spectrum information (F) covers a number of specific frequencies.

The electrode guide 7 is disposed on the frame 41 and is configured to allow passage of the tool electrode 52 therethrough for adjusting alignment of the tool electrode 52 with respect to the workpiece 9.

Referring to Figures 3 and 4 again, a work flow of the system for drilling the workpiece 9 by EDM is described in the following. After the workpiece 9 is loaded on the holder 3, the processor 64 drives rotation of the motor 44 so as to move the spindle mover 43 toward the workpiece 9, and controls the tool electrode 52 to drill the workpiece 9 by EDM. At the same time, the spindle 51 supplies the cutting fluid 511 via the fluid delivery mechanism to a portion of the workpiece 9 that is to be processed. Since the spindle mover 43 has not yet reached the preset position when moving toward the workpiece 9, the first weight, which is smaller than the second weight, is utilized to performed weighted computation on the displacement signal to result in the weighted signal, so that the processor 64 determines, based on the weighted signal, that the workpiece 9 has not yet been penetrated (fully). Therefore, the processor 64 keeps driving the spindle mover 43 to move toward the workpiece 9 for allowing the tool electrode 52 to continue drilling the workpiece 9.

During the process of drilling the workpiece 9, the cutting fluid 511 is continuously supplied to the portion of the workpiece 9 that is to be processed by EDM, so that a space between the tool electrode 52 and the drilled portion of the workpiece 9 is filled with the cutting fluid 511 as shown in Figure 4. Under influence of fluid resistance of the cutting fluid 511, protrusion of the tool electrode 52 in the workpiece 9 can be kept straight and in the direction for drilling (Z).

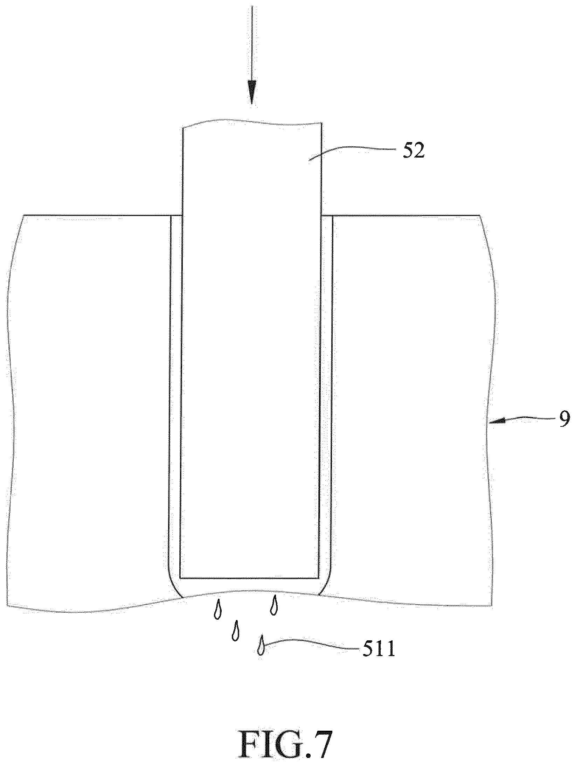

Referring to Figures 3, 6 and 7, as the spindle mover 43 moves in the direction for drilling (Z) (see Figure 4) to pass the preset position, the workpiece 9 is penetrated by the tool electrode 52, and the cutting fluid 511 drains away from a through hole of the workpiece 9 formed by the tool electrode 52 as a result of the penetration. No longer influenced by the fluid resistance of the cutting fluid 511, the tool electrode 52 may start to vibrate due to movement of the spindle mover 43. Since at this moment, the spindle mover 43 has passed the preset position in the direction for drilling (Z), the second weight, which is greater than the first weight, is utilized to perform weighted computation on the displacement signal to result in the weighted signal. According to the weighted signal thus obtained, the processor 64 determines that the spindle mover 43 is at a position closer to the workpiece 9 than the preset position is to the workpiece 9. Furthermore, variation in a clearance between the tool electrode 52 and the workpiece 9 due to vibration of the tool electrode 52, and drainage of the cutting fluid 511 from the workpiece 9 may result in a change of the operating voltage of the tool electrode 52. This change of the operating voltage is reflected in an increased magnitude of the high frequency component (F2) in the spectrum information (F) of the operating voltage signal (V) associated with the operating voltage of the tool electrode 52. Based on this relationship, the processor 64 determines that the workpiece 9 is penetrated by EDM when it is determined that the spectrum information (F) conforms with the predetermined figure pattern which indicates an increased magnitude in a high frequency component.

To trim the edge of the through hole on the workpiece 9 by the tool electrode 52, the processor 64 drives the spindle mover 43 to bring the tool electrode 52 to move the additional distance after it is determined that the workpiece 9 is penetrated by EDM. In this way, the workpiece 9 is appropriately processed, and the processor 64 stops driving rotation of the motor 44 to halt movement of the spindle mover 64 and stops supplying electricity to the tool electrode 52.

Assisted by the system for drilling a workpiece by EDM according this disclosure, the fact that the workpiece 9 is penetrated can be determined in about two seconds after the penetration occurs. Additionally, precision of drilling by the system can be controlled to be within 0.5 millimeters for repeated processing.

Moreover, implementation of the system for drilling a workpiece by EDM according this disclosure omits a penetration detector board which is required in a conventional EDM machine, so cost of the implementation of the system can be reduced. Furthermore, without requirement of having physical contact with the penetration detector board, for a workpiece as shown in Figure 2, the system of this disclosure is capable of penetrating an upper wall of the workpiece while keeping a bottom wall of the workpiece intact. As a result, the system of this disclosure can process more types of physical structures of workpieces.

In summary, the position recorder 61 generates the weighted signal by performing weighted computation on the displacement signal outputted by the displacement detector 45. The voltage recorder 62 continuously measures operating voltage of the tool electrode 52 so as to obtain the operating voltage signal (V). The spectrum analyzer 63 computes the spectrum information (F) based on the operating voltage signal (V) by FFT. The processor 64 determines, based on the weighted signal and the spectrum information (F), whether the workpiece 9 is penetrated by EDM, and stops driving the spindle mover 43 to move further and stops supplying electricity to the tool electrode 52 after the spindle mover 43 has moved the additional distance since it is determined that the workpiece 9 is penetrated by EDM.

In the description above, for the purposes of explanation, numerous specific details have been set forth in order to provide a thorough understanding of the embodiment. It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects.

## Claims

1. A system for drilling a workpiece (9) by electrical discharge machining, EDM, said system comprising:
a base (2);
a holder (3) that is disposed on said base (2) and that is configured to hold the workpiece (9);
a positioning unit (4) that includes
a frame (41) disposed on said base (2),
a screw rod (42) rotatably mounted to said frame (41), extending parallel to a direction (Z) for drilling the workpiece (9), and rotatable about an axis of said screw rod (42) along which said screw rod (42) extends,
a spindle mover (43) threadedly engaging said screw rod (42) and being actuated by rotation of said screw rod (42) to move along the direction (Z),
a motor (44) disposed on said frame (41), mechanically coupled to said screw rod (43), and configured to drive rotation of said screw rod (42), and
a displacement detector (45) disposed on said motor (44), and configured to output a displacement signal which indicates a position of said spindle mover (43) based on an amount of rotation outputted by said motor (44);
a processing unit (5) that includes
a spindle (51) provided with a fluid delivery mechanism and disposed on said spindle mover (43), and
a tool electrode (52) coupled to a portion of said spindle (51) near said holder (3) and extending toward the workpiece (9) so as to drill the workpiece (9) by EDM; and
a control unit (6) that is configured to drive rotation of said motor (44) and to supply electricity to said tool electrode (52) for causing electrical discharges between said tool electrode (52) and the workpiece (9), said control unit (6) including
a position recorder (61) electrically connected to said displacement detector (45) for receiving the displacement signal from said displacement detector (45), and generating a weighted signal by performing weighted computation on the displacement signal,
a voltage recorder (62) electrically connected to said tool electrode (52), and continuously measuring operating voltage of said tool electrode (52) so as to obtain an operating voltage signal,
a spectrum analyzer (63) electrically connected to said voltage recorder (62) for receiving the operating voltage signal from said voltage recorder (62), and computing spectrum information based on the operating voltage signal, and
a processor (64) electrically connected to said position recorder (61), said spectrum analyzer (63), said motor (44) and said tool electrode (52), and configured to determine, based on the weighted signal and the spectrum information, whether the workpiece (9) is penetrated by EDM, and to stop driving rotation of said motor (44) and stop supplying electricity to said tool electrode (52) after said spindle mover (43) has moved an additional distance since it is determined that the workpiece (9) is penetrated by EDM.

2. The system as claimed in claim 1, **characterized in that** said spectrum analyzer (63) is configured to perform fast Fourier transform, FFT, on the operating voltage signal obtained by measuring the operating voltage of said tool electrode (52) in a predetermined time duration, and to remove a low frequency component of the operating voltage signal which has undergone FFT to result in the spectrum information.

3. The system as claimed in one of claims 1 and 2, **characterized in that** said position recorder (61) is configured to generate the weighted signal by, when the position of said spindle mover (43) indicated by the displacement signal is farther away from the workpiece (9) than a preset position is from the workpiece (9), performing weighted computation on the displacement signal with a first weight, and by, when the position of said spindle mover (43) indicated by the displacement signal is closer to the workpiece (9) than the preset position is to the workpiece (9), performing weighted computation on the displacement signal with a second weight greater than the first weight.

4. The system as claimed in claim 3, **characterized in that** said processor (64) is configured to, when it is determined that the weighted signal is generated by performing weighted computation on the displacement signal with the second weight, determine that said spindle mover (43) is at a position closer to the workpiece (9) than the preset position is to the workpiece (9), and to, when it is determined that the spectrum information conforms with a predetermined condition and after it is determined that said spindle mover (43) is at the position closer to the workpiece (9) than the preset position is to the workpiece (9), determine that the workpiece (9) is penetrated by EDM.

5. The system as claimed in one of claims 1 to 4, further **characterized by** an electrode guide (7) disposed on said frame (41) and configured to allow passage of said tool electrode (52) therethrough for adjusting alignment of said tool electrode (52) with respect to the workpiece (9) .

## Patentansprüche

1. System zum Bohren eines Werkstücks (9) durch Funkenerosion, EDM, wobei das System umfasst:
eine Basis (2);
einen Halter (3), der auf der Basis (2) angeordnet ist und der konfiguriert ist, um das Werkstück (9) zu halten;
eine Positioniereinheit (4), die einschließt:
einen Rahmen (41), der auf der Basis (2) angeordnet ist,
eine Schraubenstange (42), die an dem Rahmen (41) drehbar montiert ist, sich parallel zu einer Richtung (Z) zum Bohren des Werkstücks (9) erstreckt und um eine Achse der Schraubenstange (42) drehbar ist, entlang der sich die Schraubenstange (42) erstreckt,
eine Spindelbewegungsvorrichtung (43), die mit einem Gewinde in die Schraubenstange (42) eingreift und durch Drehen der Schraubenstange (42) betätigt wird, um sich entlang der Richtung (Z) zu bewegen,
einen Motor (44), der an dem Rahmen (41) angeordnet ist, mechanisch mit der Schraubenstange (42) gekoppelt ist und konfiguriert ist, um die Drehung der Schraubenstange (42) anzutreiben, und
einen Verschiebungsdetektor (45), der an dem Motor (44) angeordnet ist und konfiguriert ist, um ein Verschiebungssignal auszugeben, das eine Position der Spindelbewegungsvorrichtung (43) basierend auf einem von dem Motor (44) ausgegebenen Rotationsbetrag angibt;
eine Verarbeitungseinheit (5), die einschließt:
eine Spindel (51), die mit einem Fluidabgabemechanismus versehen und auf der Spindelbewegungsvorrichtung (43) angeordnet ist, und
eine Werkzeugelektrode (52), die mit einem Abschnitt der Spindel (51) in der Nähe des Halters (3) gekoppelt ist und sich in Richtung des Werkstücks (9) erstreckt, um das Werkstück (9) durch die Funkenerosion zu bohren; und
eine Steuereinheit (6), die konfiguriert ist, um das Drehen des Motors (44) anzutreiben und der Werkzeugelektrode (52) Elektrizität zuzuführen, um elektrische Entladungen zwischen der Werkzeugelektrode (52) und dem Werkstück (9) zu verursachen, wobei die Steuereinheit (6) einschließt:
einen Positionsaufzeichnungsgerät (61), das mit dem Verschiebungsdetektor (45) elektrisch verbunden ist, um das Verschiebungssignal von dem Verschiebungsdetektor (45) zu empfangen und ein gewichtetes Signal durch Durchführen einer gewichteten Berechnung des Verschiebungssignals zu erzeugen;
ein Spannungsaufzeichnungsgerät (62), das mit der Werkzeugelektrode (52) elektrisch verbunden ist und die Betriebsspannung der Werkzeugelektrode (52) kontinuierlich misst, um ein Betriebsspannungssignal zu erhalten;
einen Spektrumanalysator (63), der mit dem Spannungsaufzeichnungsgerät (62) elektrisch verbunden ist, um das Betriebsspannungssignal von dem Spannungsaufzeichnungsgerät (62) zu empfangen und Spektruminformationen basierend auf dem Betriebsspannungssignal zu berechnen, und
einen Prozessor (64), der mit dem Positionsaufzeichnungsgerät (61), dem Spektrumanalysator (63), dem Motor (44) und der Werkzeugelektrode (52) elektrisch verbunden ist und konfiguriert ist, um basierend auf dem gewichteten Signal und den Spektruminformationen zu bestimmen, ob das Werkstück (9) von der Funkenerosion durchdrungen ist und die Antriebsdrehung des Motors (44) zu stoppen und die Stromversorgung der Werkzeugelektrode (52) zu stoppen, nachdem sich die Spindelbewegungsvorrichtung (43) um eine zusätzliche Strecke bewegt hat, nachdem bestimmt wurde, dass das Werkstück (9) von der Funkenerosion durchdrungen ist.

2. System nach Anspruch 1, **dadurch gekennzeichnet, dass** der Spektrumanalysator (63) konfiguriert ist, um eine schnelle FourierTransformation, FFT, auf dem Betriebsspannungssignal durchzuführen, das durch Messen der Betriebsspannung der Werkzeugelektrode (52) in einer vorbestimmten Zeitdauer erhalten wird, und eine Niederfrequenzkomponente des Betriebsspannungssignals zu entfernen, das einer FFT unterzogen wurde, um die Spektruminformationen zu erhalten,

3. System nach einem der Ansprüche 1 und 2, **dadurch gekennzeichnet, dass** das Positionsaufzeichnungsgerät (61) so konfiguriert ist, dass es das gewichtete Signal durch die eine gewichtete Berechnung des Verschiebungssignals mit einem ersten Gewicht erzeugt, wenn die durch das Verschiebungssignal angegebene Position der Spindelbewegungsvorrichtung (43) vom Werkstück (9) weiter entfernt als eine voreingestellte Position vom Werkstück (9) ist, und eine gewichtete Berechnung des Verschiebungssignals mit einem zweiten Gewicht, das größer als das erste Gewicht ist, wenn die durch den Verschiebungssignal angegebene Position der Spindelbewegungsvorrichtung (43) näher zum Werkstück (9) als die voreingestellte Position zum Werkstück (9) ist.

4. System nach Anspruch 3, **dadurch gekennzeichnet, dass** der Prozessor (64) konfiguriert ist, um zu bestimmen, wenn bestimmt wurde, dass das gewichtete Signal durch Durchführen einer gewichteten Berechnung des Verschiebungssignals mit dem zweiten Gewicht erzeugt wird, dass die Spindelbewegungsvorrichtung (43) an einer Position näher am Werkstück (9) als die voreingestellte Position am Werkstück (9) ist, und zu bestimmen, wenn bestimmt wurde, dass die Spektruminformationen einem vorbestimmten Zustand entsprechen, und nachdem bestimmt wurde, dass die Spindelbewegungsvorrichtung (43) näher am Werkstück (9) als die voreingestellte Position am Werkstück (9) ist, dass das Werkstück (9) von der Funkenerosion durchdrungen wird.

5. System nach einem der Ansprüche 1 bis 4, ferner **gekennzeichnet durch** eine Elektrodenführung (7), die an dem Rahmen (41) angeordnet und konfiguriert ist, um den Durchgang der Werkzeugelektrode (52) durch diese zum Einstellen der Ausrichtung der Werkzeugelektrode (52) in Bezug auf das Werkstück (9) zu ermöglichen.

## Revendications

1. Système de perçage d'une pièce (9) par usinage par électroérosion, EDM, ledit système comprenant :
une base (2) ;
un support (3) qui est disposé sur ladite base (2) et qui est configuré pour maintenir la pièce (9) ;
une unité de positionnement (4) qui comprend
un châssis (41) disposé sur ladite base (2),
une tige filetée (42) montée à rotation sur ledit châssis (41), s'étendant parallèlement à une direction (Z) pour percer la pièce (9), et susceptible de tourner autour d'un axe de ladite tige filetée (42) le long duquel ladite tige filetée (42) s'étend,
un dispositif de déplacement de broche (43) venant en prise par filetage avec ladite tige filetée (42) et étant actionné par rotation de ladite tige filetée (42) pour se déplacer le long de la direction (Z),
un moteur (44) disposé sur ledit châssis (41), couplé mécaniquement à ladite tige filetée (42) et configuré pour entraîner la rotation de ladite tige filetée (42), et
un détecteur de déplacement (45) disposé sur ledit moteur (44), et configuré pour délivrer un signal de déplacement qui indique une position dudit dispositif de déplacement de broche (43) sur la base d'une quantité de rotation délivrée par ledit moteur (44) ;
une unité de traitement (5) qui comprend
une broche (51) pourvue d'un mécanisme de distribution de fluide et disposée sur ledit dispositif de déplacement de broche (43), et
une électrode d'outil (52) couplée à une partie de ladite broche (51) à proximité dudit support (3) et s'étendant vers la pièce (9) de manière à percer la pièce (9) par EDM ; et
une unité de commande (6) qui est configurée pour commander la rotation dudit moteur (44) et pour fournir de l'électricité à ladite électrode d'outil (52) pour provoquer des décharges électriques entre ladite électrode d'outil (52) et la pièce (9), ladite unité de commande (6) comprenant
un enregistreur de position (61) connecté électriquement audit détecteur de déplacement (45) pour recevoir le signal de déplacement dudit détecteur de déplacement (45), et générer un signal pondéré en effectuant un calcul pondéré sur le signal de déplacement,
un enregistreur de tension (62) connecté électriquement à ladite électrode d'outil (52), et mesurant en continu la tension de fonctionnement de ladite électrode d'outil (52) de manière à obtenir un signal de tension de fonctionnement,
un analyseur de spectre (63) connecté électriquement audit enregistreur de tension (62) pour recevoir le signal de tension de fonctionnement dudit enregistreur de tension (62), et calculer des informations de spectre sur la base du signal de tension de fonctionnement, et
un processeur (64) connecté électriquement audit enregistreur de position (61), audit analyseur de spectre (63), audit moteur (44) et à ladite électrode d'outil (52), et configuré pour déterminer, sur la base du signal pondéré et des informations de spectre, si la pièce (9) est pénétrée par EDM, et pour arrêter la rotation d'entraînement dudit moteur (44) et arrêter de fournir de l'électricité à ladite électrode d'outil (52) après que ledit dispositif de déplacement de broche (43) s'est déplacé d'une distance supplémentaire après qu'il a été déterminé que la pièce (9) est traversée par EDM.

2. Système selon la revendication 1, **caractérisé en ce que** ledit analyseur de spectre (63) est configuré pour effectuer une transformée de Fourier rapide, FFT, sur le signal de tension de fonctionnement obtenu en mesurant la tension de fonctionnement de ladite électrode d'outil (52) pendant une durée prédéterminée, et pour supprimer une composante basse fréquence du signal de tension de fonctionnement qui a subi une FFT pour donner les informations de spectre.

3. Système selon l'une des revendications 1 et 2, **caractérisé en ce que** ledit enregistreur de position (61) est configuré pour générer le signal pondéré par, lorsque la position dudit dispositif de déplacement de broche (43) indiquée par le signal de déplacement est plus éloignée de la pièce (9) qu'une position prédéfinie l'est de la pièce (9), l'étape consistant à effectuer un calcul pondéré sur le signal de déplacement avec un premier poids, et par, lorsque la position dudit dispositif de déplacement de broche (43) indiquée par le signal de déplacement est plus proche de la pièce (9) que la position prédéfinie l'est de la pièce (9), l'étape consistant à effectuer un calcul pondéré sur le signal de déplacement avec un second poids supérieur au premier poids

4. Système selon la revendication 3, **caractérisé en ce que** ledit processeur (64) est configuré pour, lorsqu'il est déterminé que le signal pondéré est généré en effectuant un calcul pondéré sur le signal de déplacement avec le second poids, l'étape consistant à déterminer que ledit dispositif de déplacement de broche (43) est à une position plus proche de la pièce (9) que la position prédéfinie l'est de la pièce (9), et à, lorsqu'il est déterminé que les informations de spectre sont conformes à une condition prédéterminée et après avoir déterminé que ledit dispositif de déplacement de broche (43) est à la position plus proche de la pièce (9) que la position prédéfinie l'est de la pièce (9), déterminer que la pièce (9) est pénétrée par EDM.

5. Système selon l'une des revendications 1 à 4, **caractérisé en outre par** un guide d'électrode (7) disposé sur ledit châssis (41) et configuré pour permettre le passage de ladite électrode d'outil (52) à travers celui-ci pour ajuster l'alignement de ladite électrode d'outil (52) par rapport à la pièce (9).
